# EUROPÄISCHE PATENTANMELDUNG

(11) **EP 3 309 481 A1**
(43) Veröffentlichungstag der Anmeldung: **18.04.2018**
(21) Anmeldenummer: 17195970.3
(22) Anmeldetag: 11.10.2017
(51) Int. Cl.: F25D 17/06, F16F 3/087, F25D 23/00

(54) **KÄLTEGERÄT MIT EINEM LÜFTER UND EINEM ENTKOPPLUNGSELEMENT**

(30) Priorität: 17.10.2016 DE 102016220191
(71) Anmelder: BSH Hausgeräte GmbH, 81739 München (DE)
(72) Erfinder: Schimmele, Martin, 73485 Unterschneidheim (DE); Mayer, Simon, 89160 Dornstadt (DE)

(57) **Zusammenfassung**

Ein Kältegerät (10), insbesondere ein Haushaltskältegerät, hat eine Lagerkammer, einem Verdampfer und einem Luftkreislauf, der von einem Lüfter angetrieben wird und Luft zwischen der Lagerkammer und dem Verdampfer umwälzt, wobei der Lüfter (30) über mindestens ein Entkopplungselement (20,50) an mindestens einem Strukturelement (40) des Kältegeräts befestigt ist. Das Entkopplungselement (20,50) weist ein erstes Dämpfungsglied (22,51,52,53) mit einem ersten Wert einer die Dämpfungseigenschaft charakterisierenden Größe und ein zweites Dämpfungsglied (24,51,52,53) mit einem zweiten Wert der die Dämpfungseigenschaft charakterisierenden Größe auf.

## Beschreibung

Die vorliegende Erfindung betrifft ein Kältegerät, insbesondere ein Haushaltskältegerät, mit einer Lagerkammer, einem Verdampfer und einem Luftkreislauf, der von einem Lüfter angetrieben wird, wobei der Lüfter über mindestens ein Entkopplungselement an mindestens einem Strukturelement des Kältegeräts befestigt ist.

In einem solchen Kältegerät werden durch die Bewegung eines Rotors mit Welle und Lüfterrad insbesondere bei hohen Drehzahlen sowohl der Lüfter als auch Teile im benachbarten Kältegerät zu Schwingungen angeregt und häufig in Resonanz versetzt. Dies führt zu einem lauten Betriebsgeräusch des Kältegeräts. Um das Betriebsgeräusch zu verbessern wird in der Lüfterbefestigung zwischen dem Lüfter und dem Strukturelement ein Entkopplungselement vorgesehen.

Durch die Anwendung von drehzahlgeregelten Lüftern kann eine höhere Effizienz erreicht werden, jedoch besteht die Gefahr durch Anwendung verschiedener Drehzahlen in Resonanzfelder zu gelangen. Eine Vermeidung bekannter Resonanzfelder durch eine Drehzahlsteuerung ist unerwünscht, da sie die Energieeffizienz des Kältegeräts mindert.

Die DE 10 2012 218 706 offenbart ein Kältegerät, an dem ein Lüfter an einem Lüfterhalter befestigt ist, an dem Entkopplungselemente befestigt sind. Ein Entkopplungselement besteht aus einem scheibenförmigen Dämpfungselement mit einer Bohrung und wird am Scheibenumfang in einer Öffnung im Lüfterhalter gefasst. Die Anordnung bestehend aus Lüfter, Lüfterhalter sowie Entkopplungselementen und wird über die Bohrungen der Dämpfungselemente mit einem Strukturelement des Kältegeräts verbunden.

In der DE 10 2006 020 506 wird in einer Kältemaschine ein Lüfter über Dämpfungselemente an einer Zwischenplatte befestigt und die Zwischenplatte wird über gleichartige Dämpfungselemente an einem Strukturelement befestigt.

Die DE10 2009 015 058 offenbart eine Dämpfungsscheibe zum Einsatz im Automobilbereich. Die Dämpfungsscheibe weist auf den beiden einander gegenüberliegenden Scheibenflächen unterschiedliche Dämpfungselemente auf, nämlich auf der ersten Scheibenfläche erste Dämpfungselemente und auf der zweiten Scheibenfläche zweite Dämpfungselemente. Die ersten Dämpfungselemente sollen Stöße, die sich von einem Fahrwerk auf Aggregate wie einen Lüfter übertragen, dämpfen und die zweiten Dämpfungselemente sollen Vibrationen, die sich von einem Aggregat wie einem Lüfter auf ein Chassis übertragen, dämpfen.

Es ist die Aufgabe der vorliegenden Erfindung, ein Kältegerät, insbesondere ein Haushaltskältegerät, mit einer verbesserten Dämpfung von Vibrationen eines Lüfters in einem Luftkreislauf und damit ein Kältegerät mit geringeren Lüftergeräuschen bereitzustellen.

Diese Aufgabe wird durch Gegenstände mit den Merkmalen des Anspruchs 1 gelöst. Vorteilhafte Ausführungsformen der Erfindung sind Gegenstand der Figuren, der Beschreibung und der abhängigen Ansprüche.

Ein erfindungsgemäßes Kältegerät, insbesondere ein Haushaltskältegerät, hat eine Lagerkammer, einen Verdampfer und einen Luftkreislauf, der von einem Lüfter angetrieben wird und Luft zwischen der Lagerkammer und dem Verdampfer umwälzt. Dabei ist der Lüfter über mindestens ein Entkopplungselement an mindestens einem Strukturelement des Kältegeräts befestigt. Das Entkopplungselement weist ein erstes Dämpfungsglied mit einem ersten Wert einer die Dämpfungseigenschaft charakterisierenden Größe und ein zweites Dämpfungsglied mit einem zweiten Wert der die Dämpfungseigenschaft charakterisierenden Größe auf.

Durch die vorliegende Erfindung kann mit der Kopplung von mehreren Dämpfungselementen der Vorteil erreicht werden, dass die Dämpfung der Lüftervibrationen über einen breiteren Frequenzbereich wirksam erfolgen kann.

Die Ausgestaltung mit einem Entkopplungselement ist vorteilhaft wenn der Lüfter nahe der Lüfterachse aufgehängt wird. Die Ausgestaltung mit mehreren Entkopplungselementen ist vorteilhaft wenn der Lüfter entfernt von der Lüfterachse aufgehängt wird.

Die Ausgestaltung der Befestigung des Lüfters an einem Strukturelement ist vorteilhaft wenn eine voneinander unabhängige Montage von Strukturelementen gewünscht wird. Die Ausgestaltung der Befestigung des Lüfters an mehr als einem Strukturelement ist vorteilhaft wenn eine weitere Verbindung der beteiligten Strukturelemente, nämlich hier über den Lüfter, gewünscht wird.

In einer vorteilhaften Ausgestaltung Erfindung ist der Lüfter an einem Lüfterhalter befestigt und der Lüfterhalter ist an dem Entkopplungselement befestigt. Dadurch wird beispielsweise der technische Vorteil erreicht, dass die Befestigung des Lüfters an dem mindestens einem Strukturelement durch geometrische Gestaltung des Halters sehr frei gestaltet werden kann.

In einer weiteren vorteilhaften Ausgestaltung des Kältegerätes ist die die Dämpfungseigenschaft charakterisierende Größe ein Dämpfungsfaktor.

In einer weiteren vorteilhaften Ausgestaltung des Kältegerätes ist die die Dämpfungseigenschaft charakterisierende Größe eine Härte des Materials des Dämpfungsglieds.

Der Fachmann hat hier die Möglichkeit, je nach den durch die Anwendung vorgegebenen Umständen sowohl unterschiedliche Größen die die Dämpfungseigenschaft charakterisieren zu wählen als auch für die gewählte Größe unterschiedliche Werte für die mehreren Dämpfungsglieder zu wählen. Die mehreren Dämpfungselemente ermöglichen auch verschiedene die die Dämpfungseigenschaft charakterisieren zu kombinieren, beispielsweise ein Dämpfungselement nach seiner Härte auszuwählen und ein anderes Dämpfungselement desselben Entkopplungselements nach seinem Dämpfungsfaktor auszuwählen.

Vorzugsweise werden bei mehreren Entkopplungselementen gleichartige Entkopplungselemente verwendet.

In einer weiteren vorteilhaften Ausgestaltung des Kältegerätes sind der erste Wert und der zweite einer die Dämpfungseigenschaft charakterisierenden Größe gleich oder unterschiedlich sind. Dadurch wird beispielsweise der technische Vorteil erreicht, dass mit derselben Konstruktion sowohl eine Verstärkung der Dämpfung in einem Frequenzbereich als auch eine Verbreiterung des bezüglich der Dämpfung wirksamen Frequenzbereichs gewählt bzw. erreicht werden kann.

In einer weiteren vorteilhaften Ausgestaltung des Kältegerätes sind das erste Dämpfungsglied und das zweite Dämpfungsglied voneinander beabstandet mit einem Abstandsglied dazwischen. Dadurch wird beispielsweise der technische Vorteil erreicht, dass die Befestigung des Lüfterhalters an dem Strukturelement bei unterschiedlichen Abständen zwischen Lüfterhalter und Strukturelement mit denselben Dämpfungselementen realisiert werden kann.

Gemäß einer weiteren vorteilhaften Ausgestaltung des Kältegerätes weist das Entkopplungselement eine zylindrische Form auf. Diese Form hat beispielsweise den technischen Vorteil, dass sie als eine einfache geometrische Form kostengünstig herstellbar ist und wenig Bauraum benötigt.

In einer weiteren vorteilhaften Ausgestaltung des Kältegerätes weist das Entkopplungselement mindestens ein weiteres Dämpfungsglied auf. Dadurch wird beispielsweise der technische Vorteil erreicht, dass die Dämpfung weiter verstärkt oder der Frequenzbereich der wirksamen Dämpfung verbreitert werden kann.

In einer weiteren vorteilhaften Ausgestaltung des Kältegerätes ist der Lüfterhalter an dem Entkopplungselement mittels einer ersten Rastverbindung befestigt. Dadurch wird beispielsweise der technische Vorteil einer einfachen Montage erreicht.

In einer weiteren vorteilhaften Ausgestaltung des Kältegerätes weist das erste Dämpfungsglied oder das zweite Dämpfungsglied eine zylindrische Form mit einer umlaufenden Nut auf. Dadurch wird beispielsweise der technische Vorteil erreicht, dass das Dämpfungsglied in einer Bohrung des Halters verrasten kann.

In einer weiteren vorteilhaften Ausgestaltung des Kältegerätes ist die umlaufende Nut Teil der ersten Rastverbindung. In diesem Fall ist weist der Lüfterhalter eine teilweise offene Bohrung auf, in die das Dämpfungselement seitlich eingeführt wird, wobei die Nut eine Zentrierung in axialer Richtung der Bohrung bewirkt und die Nut mit umgreifenden Flanken des Lüfterhalters verrastet. Dadurch wird beispielsweise der technische Vorteil erreicht, dass die Montage von Entkopplungselement und Lüfterhalter zueinander vereinfacht wird, dass die Rastverbindung bei bereits auf einem Strukturelement befestigten Entkopplungselement eingegangen werden kann, und dass die Rastverbindung leicht lösbar ist.

In einer weiteren vorteilhaften Ausgestaltung des Kältegerätes ist das Strukturelement eine Wand des Verdampfers. Dadurch wird beispielsweise der technische Vorteil erreicht, dass der Lüfter einfach am Verdampfergehäuse befestigt werden kann.

In einer weiteren vorteilhaften Ausgestaltung des Kältegerätes ist das Strukturelement eine Wand eines Luftkanals. Dadurch wird beispielsweise der technische Vorteil erreicht, dass der Lüfter einfach an einer Wand des Luftkanals befestigt werden kann.

Eine bevorzugte Ausgestaltung des Kältegerätes verwendet einen Radiallüfter und stellt dafür einen Druckraum bereit. Der Radiallüfter saugt Luft aus dem Verdampfer an und bläst die Luft in den Druckraum. In einer solchen Anordnung kann der Radiallüfter an der Verdampferwand oder an der der Verdampferwand gegenüberliegenden Wand des Luftkanals befestigt werden.

In einer weiteren vorteilhaften Ausgestaltung des Kältegerätes ist das Entkopplungselement an dem Strukturelement mittels einer zweiten Rastverbindung befestigt. Dadurch wird beispielsweise der technische Vorteil erreicht, dass das Entkopplungselement einfach an dem Strukturelement befestigt werden kann. Dabei kann das Entkopplungselement allein oder verbunden mit dem Lüfterhalter und gegebenenfalls auch dem Lüfter an dem Strukturelement befestigt werden.

In einer weiteren vorteilhaften Ausgestaltung des Kältegerätes weist das Strukturelement einen Rasthaken zur Verbindung mit dem Entkopplungselement auf. Dadurch wird beispielsweise der technische Vorteil erreicht, dass der Rasthaken bei der Herstellung des Strukturelements geformt werden kann.

In einer weiteren vorteilhaften Ausgestaltung des Kältegerätes ist das Entkopplungselement hohl und ist von dem Rasthaken axial durchdrungen. Dadurch wird beispielsweise der technische Vorteil erreicht, dass das Entkopplungselement durch aufstecken auf den Rasthaken einfach montiert werden kann.

Ausführungsbeispiele der Erfindung sind in den Zeichnungen dargestellt und werden im Folgenden näher beschrieben.

Es zeigt dabei:
- Figur 1:: eine schematische Ansicht eines Kältegerätes gemäß einer Ausführungsform der Erfindung;
- Figur 2:: eine schematische perspektivische Ansicht eines Entkopplungselements eines Kältegerätes gemäß einer Ausführungsform der Erfindung;
- Figur 3:: eine schematische perspektivische Ansicht einer Anordnung mit einem Lüfter, der mit Entkopplungselementen befestigt ist, eines Kältegerätes gemäß einer Ausführungsform der Erfindung;
- Figur 4:: eine schematische perspektivische Ansicht eines Rasthakens zur Aufnahme eines Entkopplungselements eines Kältegerätes gemäß einer Ausführungs-form der Erfindung; und
- Figur 5:: eine schematische perspektivische Ansicht eines Entkopplungselements eines Kältegerätes gemäß einer weiteren Ausführungsform der Erfindung.

In den Figuren sind zur knappen Darstellung voneinander unabhängige Ausgestaltungen in derselben Ausführungsform realisiert. Identische Bezugszeichen in verschiedenen Figuren bezeichnen gleiche oder gleichwirkende Elemente. Die Ausgestaltungen zeigen einen Kühlschrank mit einem Lagerraum für Kühlgut, Kombinationen mit weiteren Lagerräumen, beispielsweise für Gefriergut, sind von der Erfindung mit umfasst.

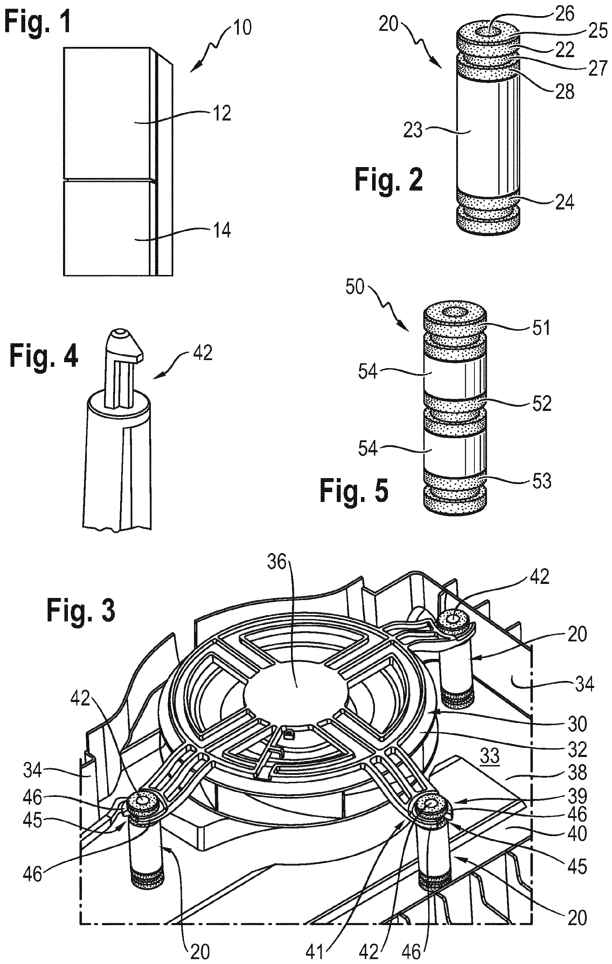

Fig. 1 zeigt einen Kühlschrank stellvertretend für ein Kältegerät 10 mit einer Kühlfachtür 12 zu einem Kühlfach und einer Gefrierfachtür 14 zu einem Gefrierfach. Der Kühlschrank dient beispielsweise zur Kühlung von Lebensmitteln und umfasst eine Lagerkammer, einen Verdampfer und einen Luftkreislauf, der von einem Lüfter angetrieben wird und Luft zwischen der Lagerkammer und dem Verdampfer umwälzt. Der Lüfter ist über mehrere Entkopplungselemente an einem Strukturelement des Kältegeräts befestigt.

Fig. 2 zeigt ein Entkopplungselement 20 des Kältegerätes 10 gemäß einer Ausführungsform der Erfindung. Das Entkopplungselement 20 weist ein erstes Dämpfungsglied 22 mit einem ersten Wert einer die Dämpfungseigenschaft charakterisierenden Größe und ein zweites Dämpfungsglied 24 mit einem zweiten Wert der die Dämpfungseigenschaft charakterisierenden Größe auf.

Das Entkopplungselement 20 hat beispielsweise zwei gleichartige Dämpfungsglieder 22 und 24, die an den Stirnseiten eines zylindrischen Abstandsglieds 23 angeordnet sind. Die Dämpfungsglieder 22 und 24 haben den gleichen Wert der die Dämpfungseigenschaft charakterisierende Größe Dämpfungsfaktor.

Das Dämpfungsglied 22 hat die Form einer Scheibe 25 mit einer Bohrung 26 und einer umlaufenden Nut 27 am Scheibenrand 28.

Das Dämpfungsglied 24 ist identisch zum Dämpfungsglied 22 aufgebaut. Die Radien der Scheiben der Dämpfungsglieder 22 und 24 sowie des zylindrischen Abstandsglieds 23 sind im Wesentlichen gleich. Das Entkopplungselement 20 weist daher eine zylindrische Form auf.

Fig. 3 zeigt einen Lüfter 30 des Kältegerätes 10, der mit Entkopplungselementen 20 befestigt ist. Der Lüfter 30 ist ein Radiallüfter 32, der in einem Druckraum 33 mit einer Wand 34 angeordnet ist, wobei der Druckraum Teil eines Luftkanals ist. Der Lüfter 30 ist über einen Lüfterhalter 36 und die Entkopplungselemente 20 an einer Verdampferwand 38 befestigt. Der Lüfter saugt Luft aus dem Verdampfer an durch die Verdampferwand 38 und bläst die Luft in den Druckraum 33.

Der Lüfterhalter 36 an den Entkopplungselementen 20 mittels einer ersten Rastverbindung 39 befestigt. Auf der Verdampferwand 38 als Strukturelement 40 sind Rasthaken 42 angeordnet. Die Entkopplungselemente 20 sind an dem Strukturelement 40 mittels einer zweiten Rastverbindung 41 befestigt.

Die Entkopplungselemente 20 sind hohl die Rasthaken 42 durchdringen die Entkopplungselemente 20 axial. Die Entkopplungselemente 20 sind bei der Montage auf die Rasthaken 40 aufgesteckt worden und mit den Rasthaken 40 verrastet.

Bei der ersten Rastverbindung 39 ist der Lüfterhalter 36 an den Entkopplungselementen 20 verrastet, wobei die umlaufende Nut 27 Teil der ersten Rastverbindung ist. Der Lüfterhalter 36 weist teilweise offene Bohrungen 45 auf, in die jeweils ein Dämpfungselement 20 seitlich eingeführt wird, wobei die Nut 27 eine Zentrierung in axialer Richtung der Bohrung 45 bewirkt und die Nut 27 mit umgreifenden Flanken 46 des Lüfterhalters 36 verrastet.

Fig. 4 zeigt einen Rasthaken 42 zur Aufnahme eines Entkopplungselements 20.

Fig. 5 zeigt ein Entkopplungselement 50 gemäß einer weiteren Ausführungsform der Erfindung. Das Entkopplungselement 50 weist drei Dämpfungselemente 51, 52, 53 auf von ähnlicher Form wie die Dämpfungselemente 22 und 24 aus Fig. 2. Zwischen den Dämpfungselementen 51 und 52 ist ein zylindrisches Abstandsglieds 54 angeordnet und zwischen den Dämpfungselementen 52 und 53 ist ein zylindrisches Abstandsglieds 55 angeordnet.

Die Dämpfungselemente 51, 52, 53 sind von gleichartiger Form, können in Bezug auf ihre Dämpfungseigenschaften jedoch gleichartig oder unterschiedlich sein.

### Bezugszeichenliste

- 10: Kältegerät
- 12: Kühlfachtür
- 14: Gefrierfachtür
- 20: Entkopplungselement
- 22: erstes Dämpfungsglied
- 23: Abstandsglied
- 24: zweites Dämpfungsglied
- 25: Scheibe
- 26: Bohrung
- 27: Nut
- 28: Scheibenrand
- 30: Lüfter
- 32: Radiallüfter
- 33: Druckraum
- 34: Wand
- 36: Lüfterhalter
- 38: Verdampferwand
- 39: erste Rastverbindung
- 40: Strukturelement
- 41: zweite Rastverbindung
- 42: Rasthaken
- 45: Bohrungen
- 50: Entkopplungselement
- 51, 52, 53: Dämpfungselemente
- 54, 55: Abstandsglied

## Patentansprüche

1. Kältegerät (10), insbesondere ein Haushaltskältegerät, mit einer Lagerkammer, einem Verdampfer und einem Luftkreislauf, der von einem Lüfter angetrieben wird und Luft zwischen der Lagerkammer und dem Verdampfer umwälzt, wobei der Lüfter (30) über mindestens ein Entkopplungselement (20,50) an mindestens einem Strukturelement (40) des Kältegeräts befestigt ist, **dadurch gekennzeichnet, dass** das Entkopplungselement (20,50) ein erstes Dämpfungsglied (22,51,52,53) mit einem ersten Wert einer die Dämpfungseigenschaft charakterisierenden Größe und ein zweites Dämpfungsglied (24,51,52,53) mit einem zweiten Wert der die Dämpfungseigenschaft charakterisierenden Größe aufweist.

2. Kältegerät nach Anspruch 1, **dadurch gekennzeichnet, dass** der Lüfter an einem Lüfterhalter (36) befestigt ist und der Lüfterhalter (36) an dem Entkopplungselement (20,50) befestigt ist.

3. Kältegerät nach Anspruch 1 oder 2, **dadurch gekennzeichnet, dass** die die Dämpfungseigenschaft charakterisierende Größe ein Dämpfungsfaktor ist.

4. Kältegerät nach einem der Ansprüche 1 bis 3, **dadurch gekennzeichnet, dass** der erste Wert und der zweite einer die Dämpfungseigenschaft charakterisierenden Größe gleich oder unterschiedlich sind.

5. Kältegerät nach einem der Ansprüche 1 bis 4, **dadurch gekennzeichnet, dass** das erste Dämpfungsglied (22,51,52,53) und das zweite Dämpfungsglied (24,51,52,53) voneinander beabstandet sind mit einem Abstandsglied (23,54,55) dazwischen.

6. Kältegerät nach einem der Ansprüche 1 bis 5, **dadurch gekennzeichnet, dass** das Entkopplungselement (20,50) eine zylindrische Form aufweist.

7. Kältegerät nach einem der Ansprüche 1 bis 6, **dadurch gekennzeichnet, dass** das Entkopplungselement (20,50) mindestens ein weiteres Dämpfungsglied (51,52,53) aufweist.

8. Kältegerät nach einem der Ansprüche 1 bis 7, **dadurch gekennzeichnet, dass** der Lüfterhalter (36) an dem Entkopplungselement (20,50) mittels einer ersten Rastverbindung (39) befestigt ist.

9. Kältegerät nach einem der Ansprüche 1 bis 8, **dadurch gekennzeichnet, dass** das erste Dämpfungsglied (22,51,52,53) oder das zweite Dämpfungsglied (24,51,52,53) eine zylindrische Form mit einer umlaufenden Nut (27) aufweist.

10. Kältegerät nach Anspruch 9 abhängig von Anspruch 8, **dadurch gekennzeichnet, dass** die umlaufende Nut (27) Teil der ersten Rastverbindung (39) ist.

11. Kältegerät nach einem der Ansprüche 1 bis 10, **dadurch gekennzeichnet, dass** das Strukturelement (40) eine Wand (38) des Verdampfers ist.

12. Kältegerät nach einem der Ansprüche 1 bis 11, **dadurch gekennzeichnet, dass** ein Strukturelement eine Wand (34) eines Luftkanals ist.

13. Kältegerät nach einem der Ansprüche 1 bis 12, **dadurch gekennzeichnet, dass** das Entkopplungselement (20,50) an dem Strukturelement (40) mittels einer zweiten Rastverbindung (41) befestigt ist.

14. Kältegerät nach einem der Ansprüche 1 bis 13, **dadurch gekennzeichnet, dass** das Strukturelement (40) einen Rasthaken (42) zur Verbindung mit dem Entkopplungselement (20,50) aufweist.

15. Kältegerät nach einem der Ansprüche 1 bis 14, **dadurch gekennzeichnet, dass** das Entkopplungselement (20,50) hohl ist und von dem Rasthaken (42) axial durchdrungen ist.
